# EUROPÄISCHE PATENTANMELDUNG

(11) **EP 2 360 206 A1**
(43) Veröffentlichungstag der Anmeldung: **24.08.2011**
(21) Anmeldenummer: 10001490.1
(22) Anmeldetag: 13.02.2010
(51) Int. Cl.: C08J 3/22, C08L 101/00, C08L 69/00

(54) **Verwendung von Mischungen zur Herstellung schlagzähmodifizierter thermoplastischer Zusammensetzungen**

(71) Anmelder: Bayer MaterialScience AG, 51368 Leverkusen (DE)
(72) Erfinder: Seidel, Andreas Dr., 41542 Dormagen (DE); Thiem, Hans-Jürgen Dr., 41539 Dormagen (DE); Wenz, Eckhard Dr., 50679 Köln (DE)

(57) **Zusammenfassung**

Die vorliegende Erfindung betrifft die Verwendung einer Mischung in einem Compoundierungsverfahren zur Herstellung pigmentierter schlagzähmodifizierter thermoplastischer Polymerzusammensetzungen enthaltend
A) 60 bis 98 Gew.-Teile, bezogen auf die Summe der Komponenten A und B, mindestens eines in Pulverform eingesetzten Pfropfpolymers bestehend aus einem kautschukelastischen Kern und einer aufgepfropften Polymerkomponente als Hülle,
B) 2 bis 40 Gew.-Teile, bezogen auf die Summe der Komponenten A und B, mindestens einer anorganischen oder organischen flüssigen Verbindung, und
C) mindestens ein Pigment ,

dadurch gekennzeichnet, dass das Pfropfpolymer A und/oder das Pigment C die flüssige anorganische oder organische Verbindung B absorbiert oder adsorbiert und die Siedetemperatur der Komponente B bei Normaldruck unterhalb der Temperatur der Polymerschmelze während der Compoundierung liegt.

## Beschreibung

Die Erfindung betrifft die Verwendung von Mischungen enthaltend ein mit einer flüchtigen anorganischen oder organischen Flüssigkeit, bevorzugt mit Wasser beaufschlagtes pulverförmiges Pfropfpolymer und mindestens ein Pigment zur Herstellung schlagzähmodifizierter thermoplastischer Zusammensetzungen enthaltend mindestens ein Pigment, welche sich durch eine verbesserte Dispergierung des Pigments in der Polymermatrix auszeichnen und dadurch verbesserte Zähigkeit und verbesserte Oberflächeneigenschaften aufweisen.

Die Erfindung betrifft darüber hinaus ein Verfahren zur Herstellung schlagzähmodifizierter thermoplastischer Zusammensetzungen enthaltend mindestens ein Pigment, welche sich durch eine verbesserte Dispergierung des Pigments in der Polymermatrix auszeichnen und dadurch verbesserte Zähigkeit und verbesserte Oberflächeneigenschaften aufweisen.

Ein technisches Problem bei der Einarbeitung von Pigmenten in thermoplastische Polymerzusammensetzungen besteht darin, die Pigmente in der Polymermatrix vollständig und gleichmäßig zu dispergieren. Unvollständig dispergierte Pigmentagglomerate führen abgesehen von Farbinhomogenitäten und mangelhafter Farbtiefe insbesondere auch zu Fehlstellen, die sich nachteilig auf die mechanischen Eigenschaften der Polymerzusammensetzungen, wie deren Zähigkeit und Reißdehnung, als auch auf die Oberflächeneigenschaften der Materialien auswirken. Größere Pigmentagglomerate führen an der Oberfläche solcher Zusammensetzungen zum Beispiel zu Störungen und Fehlstellen wie Pickeln, Schlieren und letztendlich zu einer im Allgemeinen unerwünschten Reduktion des Glanzgrades. Im Verbund mit anderen Materialien können derartige oberflächige Fehlstellen darüber hinaus auch die Verbundhaftungseigenschaften (beispielsweise die Lackhaftung) nachteilig beeinflussen.

Dispergierungsprobleme treten insbesondere bei solchen Pigmenten mit starken interpartikulären Bindungskräften (van-der-Waals-Kräften) auf. Kohlenstoff-basierende Pigmente - wie beispielsweise Ruße, Graphite, Fullerene, Graphene, Aktivkohlen, und Kohlenstoff-Nanoröhrchen, die in vielen technischen Anwendungsbereichen, beispielsweise zur Schwarzeinfärbung, zur Erhöhung der elektrischen oder thermischen Leitfähigkeit der Zusammensetzung, zur mechanischen Verstärkung oder aber auch zur Bindung und Verminderung der Flüchtigkeit niedermolekularer organischer Verbindungen wie Restmonomeren oder geruchsaktiven Substanzen zum Einsatz kommen - zeichnen sich durch besonders starke interpartikulären Bindungskräfte aus und neigen daher in besonderem Maße zur Ausbildung von Agglomeraten, die sich bei der Einarbeitung in thermoplastische Polymere nur schwer wieder zerteilen lassen.

Zur Verbesserung der Dispergierung solcher Pigmente in thermoplastischen Polymerzusammensetzungen sind aus dem Stand der Technik verschiedene Methoden bekannt.

Naheliegend ist beispielsweise die Erhöhung des spezifischen Energieeintrages durch Scherung bei der Einarbeitung der Pigmente in die Polymerschmelze in handelsüblichen Compoundieraggregaten wie Doppelschneckenextrudern oder Innenknetern. Allerdings ist der Energieeintrag bei Polymerschmelzen mit niedriger Viskosität, wie sie für eine gute thermoplastische Verarbeitbarkeit (hohe Schmelzefließfähigkeit) in den meisten Anwendungsgebieten gefordert wird, über das technische Gerät begrenzt. In anderen Fällen wird der Energieeintrag begrenzt durch die thermische Belastbarkeit der Polymerschmelze, in die das Pigment eingearbeitet werden soll. Hohe spezifische Energieeinträge führen naturgemäß zu hohen Prozesstemperaturen, welche in Abhängigkeit vom Polymer zur unerwünschten Schädigung, Alterung oder gar Zersetzung des Polymers führen können.

Ein weiteres Verfahren besteht in der Verwendung eines hochkonzentrierten Masterbatches des Pigments in einer Polymermatrix. Dieses Verfahren erfordert jedoch einen zweiten Prozessschritt und ist daher aus Kostengesichtspunkten oft wenig interessant. Des weiteren resultiert mit diesem Verfahren in der Regel nur dann im Endprodukt eine gute Pigmentdispergierung, sofern die Pigmente bereits im Masterbatch gut dispergiert vorliegen, wodurch das eigentliche Problem letztendlich nur auf den vorgelagerten Verfahrensschritt der Masterbatch-Herstellung verlagert wird.

Ein drittes Verfahren besteht in der Verwendung von Dispergierungshilfsmitteln, welche die intermolekularen Wechselwirkungen zwischen den einzelnen Pigmentpartikeln oder Pigmentaggregaten innerhalb eines Pigmentagglomerats reduzieren und dadurch die Zerscherung der Agglomerate bei der Herstellung der Compounds erleichtern sollen. Als Dispergierungshilfsmittel kommen insbesondere oberflächenaktive Wachse oder Öle wie beispielsweise gegebenenfalls oxidierte (polare) oder gegebenenfalls durch Einbau von Vinylmonomeren oder Pfropfung mit solchen Vinylmonomeren modifizierte Polyolefm-Wachse, Paraffin-Wachse oder Paraffin-Öle, Fettsäuren, Fettsäureester, Fettalkohole, Fettseifen, Fettsäureamide und Montanwachse zum Einsatz. Der Nachteil des Einsatzes solcher Dispergierungshilfsmittel ist ihr Verbleib in der hergestellten Polymerzusammensetzung und bedingt hierdurch die mögliche nachteilige Beeinflussung der anwendungstechnischen Eigenschaften der Zielprodukte. Beispielsweise können derartige Wachse in mehrphasigen Blend-Zusammensetzungen aus mehreren Polymeren (wie beispielsweise schlagzähmodifizierten Polymeren) durch eine Anreicherung an den Phasengrenzflächen die Phasenverträglichkeit der verschiedenen Polymerkomponenten und dadurch die mechanischen Eigenschaften der Blend-Zusammensetzung nachteilig beeinflussen. Ebenso können diese Additive in bestimmten Polymersystemen unerwünschte Alterungsprozesse, bei Polykondensationspolymeren beispielsweise hydrolytische Zersetzungsreaktionen, katalysieren.

Ein weiterer Nachteil des Einsatzes von solchen Dispergierungshilfsmittel ist, dass die mit den Dispergierungsmitteln abgemischten oder benetzten Pigmente oft direkt in die Schmelze der Polymere oder Polymermischungen eingebracht werden müssen, da die so behandelten Pigmente bei der Abmischung und Förderung mit Polymeren oder Polymermischungen im festen Zustand aufgrund des vorhandenen Wachses kompaktieren, was einer optimalen Dispergierung der Pigmentagglomerate im nachfolgenden Aufschmelz- und Dispergierschritt entgegensteht.

Ein viertes Verfahren besteht in der Dosierung des Pigments in Form von Pulvermischungen, die das Pigment in Abmischung mit einem hohen Überschuss an der oder einer der polymeren Komponenten, in die das Pigment eingebracht und dispergiert werden soll, enthalten. Dieses Verfahren führt aber in der Regel zu einer für viele Anwendungen im Umfang nicht zufriedenstellenden Verbesserung der Pigmentdispergierung. Darüber hinaus erfordert das Verfahren die Herstellung von feinstteiligen Polymerpulvern aus in der Regel im Produktionsprozessen in Granulatform anfallenden Polymeren, beispielsweise durch Vermahlung. Dieser zusätzliche Verfahrensschritt führt zu einer unerwünschten Erhöhung der Fertigungskosten der pigmentierten Polymerzusammensetzungen oder sogar zur Schädigung des Polymers.

Bei der Herstellung schlagzähmodifizierter Zusammensetzungen bietet sich alternativ die Dosierung des Pigments in Form von Pulvervormischungen an, die das Pigment in Abmischung mit den oft als Pulver anfallenden, als Schlagzähmodifikator zum Einsatz kommenden kautschukhaltigen Pfropfpolymeren enthalten. Viele Pigmente, insbesondere kohlenstoffbasierte Pigmente, neigen bei der Herstellung solcher Abmischungen jedoch aufgrund ihrer hohen Affinität zu den Pfropfpolymerpulvern zur Verklumpung durch Ausbildung schwer dispergierbarer Agglomerate bestehend aus Pigment- und Pfropfpolymerpartikeln. Aus diesem Grunde gestaltet sich insbesondere die Herstellung schlagzähmodifizierter, mit solchen Pigmenten additivierten Polymerzusammensetzungen mit guter Dispergierung der Pigment- als auch Pfropfpartikel, wie sie zur Realisierung guter mechanischer Eigenschaften und Fehlstellen-freier Oberflächen notwendig ist, schwierig. Oft erfordert eine solche Herstellung den technischen Umweg über einen weiteren Compoundierungsschritt, in dem aus Pfropfpolymer und mindestens einer weiteren Polymerkomponente der Zielzusammensetzung zunächst ein Präcompound hergestellt wird. Eine solche Präcompoundierung führt natürlich zu einer Erhöhung der Fertigungskosten der pigmentierten Polymerzusammensetzungen und potentiell zu einer Schädigung der Polymere und ist insofern unerwünscht.

Die Patentanmeldung DE 10 2009 009680 offenbart ein Compoundierungsverfahren zur Herstellung schlagzähmodifizierter thermoplastischer Zusammensetzungen mit reduziertem Gehalt an flüchtigen organischen Verbindungen unter Einsatz einer Pulvermischung enthaltend pulverförmiges Pfropfpolymerisat, Wasser und gegebenenfalls Polymeradditive wie beispielsweise auch Pigmente, wobei diese Mischung einen Wassergehalt von 2 bis 40 Gew.-% besitzt. Über die Verbesserung der Pigmentdispergierung, insbesondere bei Verwendung von schwer dispergierbaren Kohlenstoff-basierenden Pigmenten, in einem solchen Verfahren schweigt diese Anmeldung.

Die Aufgabe der vorliegenden Erfindung bestand darin die Dispergierung schwer dispergierbarer Pigmente in schlagzähmodifizierten thermoplastischen Polymerzusammensetzungen in einem einstufigen und dadurch kosteneffizienten Compoundierungsverfahren zu verbessern, um hierdurch die Zähigkeit und die Oberflächeneigenschaften der schlagzähmodifizierten thermoplastischen Zusammensetzungen zu verbessern.

Eine weitere Aufgabe der Erfindung bestand in der Bereitstellung eines Verfahrens zur Herstellung schlagzähmodifizierter thermoplastischer Zusammensetzungen enthaltend schwer dispergierbare Pigmente, insbesondere Kohlenstoff-basierende Pigmente, welche sich durch eine verbesserte Dispergierung des Pigments in der Polymermatrix auszeichnen und dadurch verbesserte Zähigkeit und verbesserte Oberflächeneigenschaften aufweisen.

Diese erste Aufgabe wird gelöst durch die Verwendung einer Mischung in einem Compoundierungsverfahren zur Herstellung pigmentierter schlagzähmodifizierter thermoplastischer Polymerzusammensetzungen enthaltend
A) 60 bis 98 Gew.-Teile, bevorzugt 68 bis 95 Gew.-Teile, insbesondere 75 bis 92 Gew.-Teile, bezogen auf die Summe der Komponenten A und B, mindestens eines in Pulverform eingesetzten Pfropfpolymers bestehend aus einem kautschukelastischen Kern und einer aufgepfropften Polymerkomponente als Hülle,
B) 2 bis 40 Gew.-Teile, bevorzugt 5 bis 32 Gew.-Teile, insbesondere 8 bis 25 Gew.-Teile, bezogen auf die Summe der Komponenten A und B, mindestens einer anorganischen oder organischen flüssigen Verbindung, und
C) mindestens ein Pigment,
dadurch gekennzeichnet, dass die flüssige anorganische oder organische Verbindung B vom Pfropfpolymer A und/oder Pigment C absorbiert oder adsorbiert ist und die Siedetemperatur der Komponente B bei Normaldruck (1 bar) unterhalb der Temperatur der Polymerschmelze während der Compoundierung liegt.
Die zweite Aufgabe wird gelöst durch ein Verfahren zur Herstellung schlagzähmodifizierter thermoplastischer Zusammensetzungen enthaltend mindestens ein Pigment, in dem
(i) in einem ersten Verfahrensschritt eine Mischung hergestellt wird enthaltend
   A) 60 bis 98 Gew.-Teile, bevorzugt 68 bis 95 Gew.-Teile, insbesondere 75 bis 92 Gew.-Teile, bezogen auf die Summe der Komponenten A und B, mindestens eines in Pulverform eingesetzten Pfropfpolymers bestehend aus einem kautschukelastischen Kern und einer aufgepfropften Polymerkomponente als Hülle,
   B) 2 bis 40 Gew.-Teile, bevorzugt 5 bis 32 Gew.-Teile, insbesondere 8 bis 25 Gew.-Teile, bezogen auf die Summe der Komponenten A und B, mindestens einer anorganischen oder organischen flüssigen Verbindung,
      und
   C) mindestens ein Pigment,
   dadurch gekennzeichnet, dass
   die flüssige anorganische oder organische Verbindung B auf dem Pfropfpolymer A und/oder dem Pigment C ab- oder adsorbiert wird und
   die Siedetemperatur der Komponente B bei Normaldruck (1 bar) unterhalb der Temperatur der Polymerschmelze in der Entgasungszone im Verfahrensschritt (ii) liegt,
(ii) und in einem zweiten Verfahrensschritt
   20 bis 99 Gew.-Teile, bevorzugt 70 bis 98 Gew.-Teile, insbesondere 80 bis 97 Gew.-Teile, bezogen auf die Summe der im zweiten Verfahrenschritt eingesetzten Komponenten, einer Komponente (TP) ausgewählt aus der Gruppe, bestehend aus mindestens einem thermoplastischen Polymer oder einer Mischung aus mindestens einem thermoplastischen Polymer und mindestens einem Pfropfpolymer bestehend aus einem kautschukelastischen Kern und einer aufgepfropften Polymerkomponente als Hülle gemäß Komponente A
   mit
   1 bis 80 Gew.-Teilen, bevorzugt 2 bis 30 Gew.-Teilen, insbesondere 3 bis 20 Gew.-Teilen, bezogen auf die Summe der im zweiten Verfahrensschritt eingesetzten Komponenten, der im Schritt (i) hergestellten Mischung
   und
   gegebenenfalls mit bis zu 40 Gew.-Teilen, bevorzugt mit bis zu 25 Gew.-Teilen, insbesondere mit bis zu 15 Gew.-Teilen, bezogen auf die Summe der im zweiten Verfahrensschritt eingesetzten Komponenten, weiterer Komponenten D gemischt, durch Einbringung mechanischer und thermischer Energie aufgeheizt, aufgeschmolzen und ineinander dispergiert werden und die anorganische oder organischen Verbindung B aus der so hergestellten legierten Polymerschmelze durch Anlegen eines Unterdrucks wieder entfernt wird.

Unter einer "flüssigen Verbindung" gemäß Komponente B im Sinne der vorliegenden Erfindung sind Verbindungen zu verstehen, die unter Normalbedingungen (1 bar, 25 °C) flüssig sind. In bevorzugter Ausführungsform kommt in der Mischung als flüssige Verbindung B Wasser zum Einsatz.

Kommt als Komponente B eine Mischung mehrere flüssiger Verbindungen zum Einsatz, so wird die Temperatur des Verfahrens beim Entfernen der Flüssigkeit, dass heißt die Temperatur der Polymerschmelze in der Entgasungszone des Compoundierungsaggregats im Verfahrensschritt (ii) vorzugsweise oberhalb der Siedetemperatur der höchstsiedenden Verbindung in Komponente B, bzw. oberhalb der Siedetemperatur des Azeotrops jeweils bei Normaldruck (1bar) gewählt.

Bevorzugt ist das Pigment der Komponente C mindestens ein Vertreter ausgewählt aus der Gruppe bestehend aus Ruß, Graphit, Fulleren, Graphen, Aktivkohle, und Kohlenstoff-Nanoröhrchen. Besonders bevorzugt kommt als Pigment Ruß zum Einsatz.

In einer speziellen Ausführungsform ist das thermoplastische Polymer in Verfahrensschritt (ii) ein kautschukmodifiziertes thermoplastisches Polymer oder ein Blend aus mindestens 2 Polymeren mit mindestens einem gegebenenfalls kautschukmodifizierten thermoplastischen Polymer.

In einer weiteren speziellen Ausführungsform umfassen die thermoplastischen Polymere in Verfahrensschritt (ii) auch bereits additivierte Polymerzusammensetzungen und Blends. Komponenten A und C kommen in der Mischung gemäß Verfahrensschritt (i) bevorzugt in einem Gewichtsverhältnis von 1:25 bis 500:1, bevorzugt von 1:1 bis 100:1, insbesondere von 3:1 bis 50:1 zum Einsatz.

In einer weiteren bevorzugten Ausführungsform kommt Komponente D partiell oder vollständig auch als Bestandteil der Mischung gemäß Verfahrensschritt (i) zum Einsatz.

In bevorzugter Ausführungsform ist die Komponente D in der Mischung gemäß Verfahrensschritt (i) in einem Anteil von 0 bis 80 Gew.-Teilen, bevorzugt von 0,5 bis 50 Gew.-Teilen, insbesondere von 1 bis 30 Gew.-Teilen, bezogen auf die Summe der Komponenten A bis D in der pulverförmigen Mischung enthalten.

In bevorzugter Ausführungsform handelt es sich bei der Mischung gemäß Verfahrensschritt (i) um ein rieselfähiges Pulver.

In einer alternativen Ausführungsform kann der Mischung der Komponenten A bis D gemäß Verfahrensschritt (i) auch ein Anteil thermoplastischer Polymere (TP) oder ein Anteil anderer Zusatzstoffe gemäß Komponente D in Granulatform zugesetzt werden. Dieses dient der besseren Durchmischung und Dispergierung der Pulverkomponenten bereits bei der Herstellung der Pulvermischung im Verfahrensschritt (i).

Die thermoplastischen Polymere in Granulatform kommen in der Mischung gemäß Verfahrensschritt (i) in einem Gehalt von 0 bis 30 Gew.-Teilen, bevorzugt 0,5 bis 20 Gew.-Teilen, insbesondere 1 bis 10 Gew.-Teilen, bezogen auf die Summe aller Komponenten in dieser Mischung gemäß Verfahrensschritt (i), zum Einsatz.

Als thermoplastische Polymere TP können im Verfahrensschritt (ii) beispielsweise Polyolefine (wie Polyethylen und Polypropylen), Vinyl(co)polymere (wie Polyvinylchlorid, Styrol(co)polymere (z.B. Styrol-Acrylnitril-Copolymere, Acrylnitril-Butadien-Styrol-Copolymere), Polyacrylate, Polyacrylnitril), Polyvinylacetat, thermoplastische Polyurethane, Polyacetale (wie Polyoxymethylen und Polyphenylenether), Polyamide, Polyimide, Polycarbonate, Polyester, Polyestercarbonate, Polysulfone, Polyarylate, Polyarylether, Polyphenylenether, Polyarylsulfone, Polyarylsulfide, Polyethersulfone, Polyphenylensulfid, Polyetherketone, Polyamidimide, Polyetherimide und Polyesterimide zum Einsatz kommen.

In bevorzugter Ausführungsform kommt im Verfahrensschritt (ii) als thermoplastisches Polymer (TP) mindestens ein Vertreter ausgewählt aus der Gruppe der aromatischen Polycarbonate, aromatischen

Polyestercarbonate, aromatischen Polyester, Polyamide und gegebenenfalls kautschukmodifizierten Vinyl(co)polymere sowie Blends aus mindestens zwei der vorgenannten Polymere zum Einsatz.

In besonders bevorzugter Ausführungsform kommt im Verfahrensschritt (ii) als thermoplastisches Polymer (TP) mindestens ein Vertreter ausgewählt aus der Gruppe der aromatischen Polycarbonate und aromatischen Polyester optional in Abmischung mit mindestens einem gegebenenfalls kautschukmodifizierten Vinyl(co)polymeren zum Einsatz.

Als thermoplastisches Polymer (TP) erfmdungsgemäß geeignete aromatische Polycarbonate sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 077 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I) 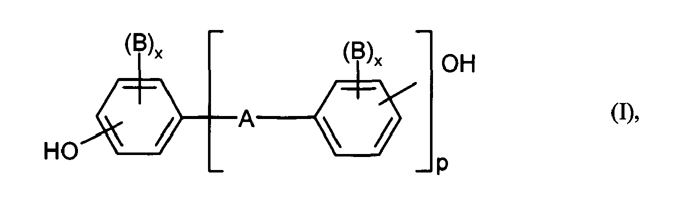 wobei
- A: eine Einfachbindung, C₁ bis C₅-Alkylen, C₂ bis C₅-Alkyliden, C₅ bis C₆-Cycloalkyliden, -O-, -SO-, -CO-, -S-, -SO₂-, C₆ bis C₁₂-Arylen, an das weitere aromatische gegebenenfalls Heteroatome enthaltende Ringe kondensiert sein können,
oder ein Rest der Formel (II) oder (III) 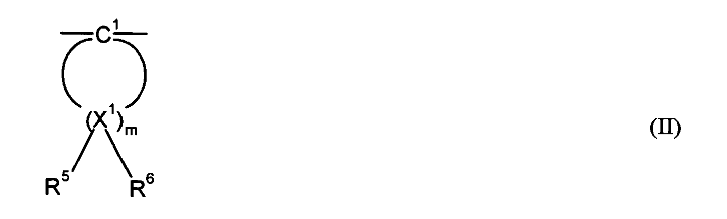 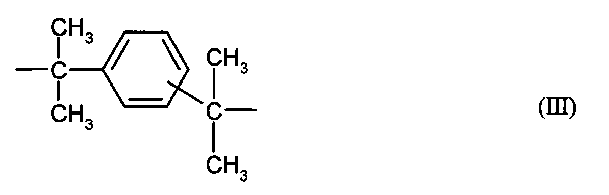
- B: jeweils C₁ bis C₁₂-Alkyl, vorzugsweise Methyl, Halogen, vorzugsweise Chlor und/oder Brom
- x: jeweils unabhängig voneinander 0, 1 oder 2,
- p: 1 oder 0 sind, und
- R⁵ und R⁶: für jedes X¹ individuell wählbar, unabhängig voneinander Wasserstoff oder C₁ bis C₆-Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kernbromierte und/oder kernchlorierte Derivate. Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di-und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan.

Insbesondere bevorzugt ist 2,2-Bis-(4-hydroxyphenyl)-propan (Bisphenol-A).

Weitere bevorzugte Ausführungsformen der im erfindungsgemäßen Verfahren zum Einsatz kommenden Polycarbonate und Polyestercarbonate sind in DE 10 2009 005762 A1, S. 4-7 offenbart, deren diesbezüglicher Inhalt in dieser Anmeldung mit aufgenommen wird.

Bei den als thermoplastisches Polymer (TP) erfindungsgemäß geeigneten aromatischen Polyestern handelt es sich bevorzugt um Polyalkylenterephthalate, die sich nach literaturbekannten Methoden herstellen lassen (s. z.B. Kunststoff-Handbuch, Band VIII, S. 695 ff., Carl-Hanser-Verlag, München 1973).

Die Polyalkylenterephthalate sind in bevorzugter Ausführungsform Reaktionsprodukte aus aromatischen Dicarbonsäuren oder ihren reaktionsfähigen Derivaten, wie Dimethylestern oder Anhydriden, und aliphatischen, cycloaliphatischen oder araliphatischen Diolen sowie Mischungen dieser Reaktionsprodukte.

Besonders bevorzugte Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 mol-%, bezogen auf die Diolkomponente Ethylenglykol- und/oder Butandiol-1,4-Reste.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Weitere bevorzugte Ausführungsformen der im erfindungsgemäßen Verfahren zum Einsatz kommenden Polyalkylenterephthalate sind in DE 10 2009 005762 A1, S. 15-17 offenbart, deren diesbezüglicher Inhalt in dieser Anmeldung mit aufgenommen wird.

Bei den als thermoplastisches Polymer (TP) erfindungsgemäß bevorzugt geeigneten Vinyl(Co)polymeren handelt es sich um kautschukfreie Homo- und/oder Copolymerisate von mindestens einem Monomeren aus der Gruppe der Vinylaromaten, Vinylcyanide (ungesättigte Nitrile), (Meth)Acrylsäure-(C₁ bis C₈)-Alkylester, ungesättigten Carbonsäuren sowie Derivaten (wie Anhydride und Imide) ungesättigter Carbonsäuren.

Insbesondere geeignet sind (Co)Polymerisate aus
50 bis 99 Gew.-%, bevorzugt 60 bis 80, insbesondere 70 bis 80 Gew.-Teile, jeweils bezogen auf das (Co)Polymerisat, mindestens eines Monomeren ausgewählt aus der Gruppe der Vinylaromaten (wie beispielsweise Styrol, α-Methylstyrol), kernsubstituierten Vinylaromaten (wie beispielsweise p-Methylstyrol, p-Chlorstyrol) und (Meth)Acrylsäure-(C₁-C₈)-Alkylester (wie beispielsweise Methylmethacrylat, n-Butylacrylat, tert.-Butylacrylat) und
1 bis 50 Gew.-%, bevorzugt 20 bis 40, insbesondere 20 bis 30 Gew.-Teilen, jeweils bezogen auf das (Co)Polymerisat, mindestens eines Monomeren ausgewählt aus der Gruppe der Vinylcyanide (wie beispielsweise ungesättigte Nitrile wie Acrylnitril und Methacrylnitril), (Meth)Acrylsäure-(C₁-C₈)-Alkylester (wie beispielsweise Methylmethacrylat, n-Butylacrylat, tert.-Butylacrylat), ungesättigte Carbonsäuren und Derivate ungesättigter Carbonsäuren (beispielsweise Maleinsäureanhydrid und N-Phenyl-Maleinimid).

Besonders bevorzugt ist das Copolymerisat aus Styrol und Acrylnitril.

Derartige (Co)Polymerisate sind bekannt und lassen sich durch radikalische Polymerisation, insbesondere durch Emulsions-, Suspensions-, Lösungs- oder Massepolymerisation herstellen.

Bei den als thermoplastisches Polymer (TP) erfindungsgemäß bevorzugt geeigneten kautschukmodifizierten Vinyl(co)polymeren handelt es sich um Pfropfpolymerisate von
50 bis 95, vorzugsweise 60 bis 93, insbesondere 70 bis 90 Gew.-%, bezogen auf dieses Pfropfpolymerisat, wenigstens eines Vinylmonomeren auf
5 bis 50, vorzugsweise 7 bis 40, insbesondere 10 bis 30 Gew.-%, bezogen auf dieses Pfropfpolymerisat, einer oder mehrerer Pfropfgrundlagen mit Glasübergangstemperaturen < 10°C, vorzugsweise < 0°C, besonders bevorzugt < -20°C.

Die Glasübergangstemperaturen wird mittels dynamischer Differenz-Thermoanalyse (DSC) gemäß der Norm DIN EN 61006 bei einer Heizrate von 10 K/min mit Definition der Tg als Mittelpunkttemperatur (Tangentenmethode) bestimmt.

Die Pfropfgrundlage hat im allgemeinen eine mittlere Teilchengröße (d₅₀-Wert) von 0,05 bis 10 µm, vorzugsweise 0,1 bis 2 µm.

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

Monomere der Pfropfhülle sind vorzugsweise Gemische aus
50 bis 99, bevorzugt 60 bis 80, insbesondere 70 bis 80 Gew.-Teile, bezogen auf B.1, Vinylaromaten und/oder kernsubstituierten Vinylaromaten (wie Styrol, α-Methylstyrol, p-Methylstyrol, p-Chlorstyrol) und/oder Methacrylsäure-(C₁-C₈)-Alkylester, wie Methylmethacrylat, Ethylmethacrylat), und
1 bis 50, bevorzugt 20 bis 40, insbesondere 20 bis 30 Gew.-Teilen, bezogen auf B.1, Vinylcyanide (ungesättigte Nitrile wie Acrylnitril und Methacrylnitril) und/oder (Meth)Acrylsäure-(C₁-C₈)-Alkylester, wie Methylmethacrylat, n-Butylacrylat, t-Butylacrylat, und/oder Derivate (wie Anhydride und Imide) ungesättigter Carbonsäuren, beispielsweise Maleinsäureanhydrid und N-Phenyl-Maleinimid.

Bevorzugt ist die Pfropfhülle aufgebaut aus Styrol in Kombination mit Acrylnitril und/oder Methylmethacrylat oder aus reinem Methylmethacrylat.

Für die Pfropfpolymerisate geeignete Pfropfgrundlagen sind beispielsweise Dienkautschuke, EP(D)M-Kautschuke, also solche auf Basis Ethylen/Propylen und gegebenenfalls Dien, Acrylat-, Polyurethan-, Silikon-, Chloropren- und Ethylen/Vinylacetat-Kautschuke sowie Silikon/Acrylat-Kompositkautschuke.

Bevorzugte Pfropfgrundlagen sind Dienkautschuke, beispielsweise auf Basis Butadien und Isopren, oder Gemische von Dienkautschuken oder Copolymerisate von Dienkautschuken oder deren Gemischen mit weiteren copolymerisierbaren Monomeren, mit der Maßgabe, dass die Glasübergangstemperatur der Pfropfgrundlage unterhalb < 10°C, vorzugsweise < 0°C, besonders bevorzugt < -20°C liegt. Besonders bevorzugt ist reiner Polybutadienkautschuk.

Weitere bevorzugte Pfropfgrundlagen sind Acrylatkautschuke, insbesondere solche auf Basis von Butylacrylat.

Besonders bevorzugte kautschukmodifizierte Vinyl(co)polymere sind ABS-Polymerisate (Emulsions-, Masse- und Suspensions-ABS), wie sie z.B. in der DE-OS 2 035 390 (=US-PS 3 644 574) oder in der DE-OS 2 248 242 (=GB-PS 1 409 275) bzw. in Ullmanns, Enzyklopädie der Technischen Chemie, Bd. 19 (1980), S. 280 ff. beschrieben sind.

Weitere bevorzugte kautschukmodifizierte Vinyl(co)polymere sind ASA-Polymerisate enthaltend Pfropfpolymere aus Styrol und Acrylnitril aufgepfropft auf Butylacrylat-Kautschuk und freies Styrol-Acrylnitril-Copolymer.

In bevorzugter Ausführungsform werden die Komponenten A und B im Verfahrensschritt (i) zunächst vorgemischt und danach Komponenten C und gegebenenfalls D untergemischt. Dabei wird die anorganische oder organische Flüssigkeit gemäß Komponente B vom Pfropfpolymer gemäß Komponente A adsorbiert oder absorbiert, so dass sowohl die Vormischung aus den Komponenten A und B als auch die Mischung aus den Komponenten A, B, C und gegebenenfalls D rieselfähige Mischungen, bevorzugt rieselfähige Pulvermischungen darstellen. Die Menge an A und B werden demnach so aufeinander abgestimmt, dass die Komponente B von Pfropfpolymer A vollständig gebunden wird. Ob und welche Menge der Komponente B vom Pfropfpolymer A gebunden werden kann, hängt dabei letztendlich sowohl von der Natur der Komponente A (insbesondere von dessen Porosität) als auch von der Natur der Komponente B (insbesondere dessen Polarität und Oberflächenspannung) ab.

Die nach den Verfahrensschritten (i) und (ii) erhaltene Zusammensetzung enthält vorzugsweise 0,05 - 15 Gew.%, weiter bevorzugt 0,1 - 5 Gew.-% und besonders bevorzugt 0,2 - 2 Gew.-% der Komponente C.

Das im Verfahrensschritt (ii) zum Einsatz kommende Compoundierungsaggregat besitzt eine Aufschmelz- und Mischzone oder eine kombinierte Aufschmelz- und Mischzone (diese "Aufschmelz- und Mischzone" wird nachfolgend auch als "Knet- und Aufschmelzzone" bezeichnet) und eine Entgasungszone, an der ein absoluter Druck p_{abs} von bevorzugt höchstens 800 mbar, weiter bevorzugt höchstens 500 mbar, besonders bevorzugt höchstens 200 mbar eingestellt wird.

Die Temperatur der Schmelze des Polymers beziehungsweise der Polymerlegierung in der Entgasungszone beträgt in bevorzugter Ausführungsform 200°C bis 350°C, bevorzugt 220°C bis 320°C, besonders bevorzugt 230°C bis 300°C.

Die mittlere Verweilzeit, in der die Schmelze des Polymers beziehungsweise der Polymerlegierung im Verfahrensschritt (ii) mit Komponente B in Kontakt steht, welche über die in Verfahrensschritt (i) hergestellte Mischung in das Verfahren eingebracht wird, ist bevorzugt auf maximal 90 s, besonders bevorzugt maximal 60 s, insbesondere bevorzugt auf max. 30 s begrenzt.

Bei dem Compoundierungsaggregat handelt es sich bevorzugt um einen Zweischneckenextruder, besonders bevorzugt um einen Zweischneckenextruder mit gleichsinnig rotierenden Wellen, wobei der Zweischneckenextruder ein Längen/Durchmesser-Verhältnis der Schneckenwelle bevorzugt von 32 bis 44, besonders bevorzugt von 34 bis 38 aufweist.

Unter "Pulver" oder "pulverförmig" im Sinne der Erfindung wird eine Komponente oder eine Mischung aus mehreren Komponenten verstanden, die im festen Aggregatszustand vorliegt und bei denen die Partikel mittlere Teilchengrößen von kleiner als 2 mm, bevorzugt von kleiner als 1 mm, insbesondere von kleiner als 0,5 mm aufweisen.

Unter "Granulat" im Sinne der Erfindung wird eine Komponente oder eine Mischung aus mehreren Komponenten verstanden, die im festen Aggregatszustand vorliegt, wobei die festen Partikel eine mittlere Teilchengröße von mindestens 2 mm und im allgemeinen von nicht mehr als 10 mm aufweisen. Die Granulatkörner können beliebige Form aufweisen, beispielsweise Linsenform, Kugelform oder Zylinderform.

Ein weiterer Gegenstand der Erfindung sind die Zusammensetzungen hergestellt nach einem der zuvor beschriebenen erfindungsgemäßen Verfahren sowie Formkörper hergestellt aus solchen Zusammensetzungen.

### Komponente A

Bei der Komponente A handelt es sich um ein pulverförmiges Pfropfpolymer oder um eine Mischung aus mehreren pulverförmigen Pfropfpolymeren. Bevorzugt als Komponente A zum Einsatz kommende Pfropfpolymere umfassen ein oder mehrere Pfropfpolymerisate von
- A.1: 5 bis 95, vorzugsweise 20 bis 90, insbesondere 25 bis 50 Gew.-%, bezogen auf Komponente A, wenigstens eines Vinylmonomeren auf
- A.2: 95 bis 5, vorzugsweise 80 bis 10, insbesondere 75 bis 50 Gew.-%, bezogen auf Komponente B, einer oder mehrerer Pfropfgrundlagen mit Glasübergangstemperaturen < 10°C, vorzugsweise < 0°C, besonders bevorzugt < -20°C.

Die Glasübergangstemperaturen wird mittels dynamischer Differenz-Thermoanalyse (DSC) gemäß der Norm DIN EN 61006 bei einer Heizrate von 10 K/min mit Definition der Tg als Mittelpunkttemperatur (Tangentenmethode) bestimmt.

Die Pfropfgrundlage A.2 hat im allgemeinen eine mittlere Teilchengröße (d₅₀-Wert) von 0,05 bis 10 µm, vorzugsweise 0,1 bis 2 µm, besonders bevorzugt 0,15 bis 0,6 µm.

Die mittlere Teilchengröße d₅₀ ist der Durchmesser, oberhalb und unterhalb dessen jeweils 50 Gew.-% der Teilchen liegen. Er kann mittels Ultrazentrifugemnessung (W. Scholtan, H. Lange, Kolloid, Z. und Z. Polymere 250 (1972), 782-1796) bestimmt werden.

Monomere A.1 sind vorzugsweise Gemische aus
- A.1.1: 50 bis 99, bevorzugt 60 bis 80, insbesondere 70 bis 80 Gew.-Teile, bezogen auf A.1, Vinylaromaten und/oder kernsubstituierten Vinylaromaten (wie Styrol, α-Methylstyrol, p-Methylstyrol, p-Chlorstyrol) und/oder Methacrylsäure-(C₁-C₈)-Alkylester, wie Methylmethacrylat, Ethylmethacrylat), und
- A.1.2: bis 50, bevorzugt 20 bis 40, insbesondere 20 bis 30 Gew.-Teilen, bezogen auf A.1, Vinylcyanide (ungesättigte Nitrile wie Acrylnitril und Methacrylnitril) und/oder (Meth)Acrylsäure-(C₁-C₈)-Alkylester, wie Methylmethacrylat, n-Butylacrylat, t-Butylacrylat, und/oder Derivate (wie Anhydride und Imide) ungesättigter Carbonsäuren, beispielsweise Maleinsäureanhydrid und N-Phenyl-Maleinimid.

Bevorzugte Monomere A.1.1 sind ausgewählt aus mindestens einem der Monomere Styrol, α-Methylstyrol und Methylmethacrylat, bevorzugte Monomere A.1.2 sind ausgewählt aus mindestens einem der Monomere Acrylnitril, Maleinsäureanhydrid und Methylmethacrylat. Besonders bevorzugte Monomere sind A.1.1 Styrol und A.1.2 Acrylnitril.

Für die Pfropfpolymerisate A geeignete Pfropfgrundlagen A.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren- und Ethylen/Vinylacetat-Kautschuke sowie Silikon/Acrylat-Kompositkautschuke.

Bevorzugte Pfropfgrundlagen A.2 sind Dienkautschuke, beispielsweise auf Basis Butadien und Isopren, oder Gemische von Dienkautschuken oder Copolymerisate von Dienkautschuken oder deren Gemischen mit weiteren copolymerisierbaren Monomeren (z.B. gemäß A.1.1 und A.1.2), mit der Maßgabe, dass die Glasübergangstemperatur der Komponente A.2 unterhalb < 10°C, vorzugsweise < 0°C, besonders bevorzugt < -20°C liegt. Besonders bevorzugt ist reiner Polybutadienkautschuk.

Die Pfropfcopolymerisate A werden durch radikalische Polymerisation, bevorzugt durch Emulsionspolymerisation hergestellt.

Besonders geeignete Pfropfpolymerisate A besitzen eine Kern-Schale-Struktur.

Der Gelanteil der Pfropfgrundlage A.2 beträgt bei in Emulsionspolymerisation hergestellten Pfropfpolymerisaten mindestens 30 Gew.-%, vorzugsweise mindestens 40 Gew.-% (in Toluol gemessen).

Der Gelgehalt der Pfropfgrundlage A.2 bzw. der Pfropfpolymere A wird bei 25°C in einem geeigneten Lösungsmittel als in diesen Lösungsmitteln unlöslicher Anteil bestimmt (M. Hoffinann, H. Krömer, R. Kuhn, Polymeranalytik I und II, Georg Thieme-Verlag, Stuttgart 1977).

Besonders geeignete Pfropfkautschuke sind auch ABS-Polymerisate, die durch Redox-Initiierung mit einem Initiatorsystem aus organischem Hydroperoxid und Ascorbinsäure gemäß US-P 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten A auch solche Produkte verstanden, die durch (Co)Polymerisation der Pfropfmonomere in Gegenwart der Pfropfgrundlage gewonnen werden und bei der Aufarbeitung mit anfallen. Diese Produkte können demnach auch freies, d.h. nicht chemisch an den Kautschuk gebundenes (Co)Polymerisat der Pfropfmonomere enthalten.

Geeignete Acrylatkautschuke gemäß A.2 sind vorzugsweise Polymerisate aus Acrylsäurealkylestern, gegebenenfalls mit bis zu 40 Gew.-%, bezogen auf A.2 anderen polymerisierbaren, ethylenisch ungesättigten Monomeren. Zu den bevorzugten polymerisierbaren Acrylsäureestern gehören C₁ bis C₈-Alkylester, beispielsweise Methyl-, Ethyl-, Butyl-, n-Octyl-und 2-Ethylhexylester; Halogenalkylester, vorzugsweise Halogen-C₁-C₈-alkylester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Allylmethacrylat; mehrfach ungesättigte heterocyclische Verbindungen, wie Trivinyl- und Triallylcyanurat; polyfunktionelle Vinylverbindungen, wie Di-und Trivinylbenzole; aber auch Triallylphosphat und Diallylphthalat. Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen. Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage A.2. Bei cyclischen vernetzenden Monomeren mit mindestens drei ethylenisch ungesättigten Gruppen ist es vorteilhaft, die Menge auf unter 1 Gew.-% der Pfropfgrundlage A.2 zu beschränken.

Bevorzugte "andere" polymerisierbare, ethylenisch ungesättigte Monomere, die neben den Acrylsäureestern gegebenenfalls zur Herstellung der Pfropfgrundlage A.2 dienen können, sind z.B. Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage A.2 sind Emulsionspolymerisate, die einen Gelgehalt von mindestens 60 Gew.-% aufweisen.

Weitere geeignete Pfropfgrundlagen gemäß A.2 sind Silikonkautschuke mit pfropfaktiven Stellen, wie sie in den DE-OS 3 704 657, DE-OS 3 704 655, DE-OS 3 631 540 und DE-OS 3 631 539 beschrieben werden.

### Komponente B

Als Komponente B eignen sich grundsätzlich alle anorganischen oder organischen flüssigen Verbindungen mit einer Siedetemperatur bei Normaldruck (1 bar) unterhalb der Temperatur der Polymerschmelze in der Entgasungszone des Compoundierungsaggregats im Verfahrensschritt (ii) oder Mischungen aus solchen Verbindungen.

Die Siedetemperatur der Komponente B beträgt unter Normaldruck bevorzugt maximal 200°C, weiter bevorzugt maximal 150°C, noch weiter bevorzugt maximal 130°C, und besonders bevorzugt von 70 bis maximal 120°C.

Die Verwendung von Wasser als Komponente B ist besonders bevorzugt und bietet die zusätzlichen Vorteile der guten Verfügbarkeit, eines geringen Kostenfaktors, guter Arbeitssicherheit und ökologischer Unbedenklichkeit.

Weitere geeignete flüssige Verbindungen sind beispielsweise Methanol, Ethanol, n-Propanol, Isopropanol, Dimethylformamid, Aceton, n-Hexan, Cyclohexan, n-Heptan, n-Octan, Toluol, sowie Mischungen dieser Flüssigkeiten.

In einer weiteren bevorzugten Ausführungsform ist Komponente B eine Mischung aus Wasser und mindestens einer mit Wasser partiell oder vollständig mischbaren weiteren Flüssigkeit, vorzugsweise ausgewählt aus der Gruppe, die Methanol, Ethanol, n-Propanol, Isopropanol, Dimethylformamid, Aceton, n-Hexan, Cyclohexan, n-Heptan, n-Octan und Toluol, umfaßt, weiter bevorzugt einem Alkohol, und besonders bevorzugt Ethanol und Isopropanol.

In dieser Ausführungsform werden das Wasser und die weitere(n) Flüssigkeit(en) in einem solchen Mischungsverhältnis eingesetzt, dass eine homogene, das heißt einphasige Mischung entsteht. Der Wassergehalt solcher Mischungen beträgt bevorzugt mindestens 50 Gew.-%, weiter bevorzugt mind. 75 Gew.-% und besonders bevorzugt mindestens 90 Gew.-%.

Die Komponente B wird dabei bevorzugt so ausgewählt, dass sie vom Pfropfpolymer A adsorbiert beziehungsweise absorbiert werden kann, so dass man durch Abmischung von A mit B eine rieselfähige Mischung und keine Suspension erhält.

### Komponente C

Als Komponente C kommen grundsätzlich beliebige anorganische oder organisches, natürliche oder synthetisch hergestellte Pigmente zum Einsatz. Unter Pigment wird dabei eine farbgebende Substanz verstanden, welche im Anwendungsmedium (hier dem thermoplastischen Polymer) unlöslich ist. Beispiele solcher Pigmente sind Titandioxid, Ruß, Bismutpigmente, Metalloxide, Metallhydroxide, Metallsulfide, Eisencyanblau, Ultramarin, Cadmiumpigmente, Chromatpigmente, Azopigmente sowie polycyclische Pigmente.

Bevorzugt kommen als Komponente C solche Pigmente mit starken interpartikulären Bindungskräften (van-der-Waals-Kräften) zum Einsatz, da diese besonders schwer zu dispergieren sind.

Bei Komponente C handelt es besonders bevorzugt um mindestens ein Kohlenstoff-basierendes Pigment ausgewählt aus der Gruppe bestehend aus Ruß, Graphit, Fulleren, Graphen, Aktivkohle und Kohlenstoff-Nanoröhrchen.

Als Kohlenstoff-Nanoröhrchen eignen sich sowohl solche mit einschichtiger Wandung (Singlewalled Carbon Nanotubes = SWCNT) als solche mit mehrschichtiger Wandung (Multi-walled Carbon Nanotubes = MWCNT).

Unter Kohlenstoffnanoröhrchen (CNT) werden vorzugsweise zylinderförmige Kohlenstoffröhren mit einem Kohlenstoffgehalt von > 95% verstanden, wobei diese keinen amorphen Kohlenstoff enthalten. Die Kohlenstoffnanoröhrchen weisen vorzugsweise einen äußeren Durchmesser zwischen 3 und 80 nm, besonders bevorzugt 5 bis 20 nm auf. Der Mittelwert des äußeren Durchmessers beträgt bevorzugt 13 bis 16 nm. Die Länge der zylinderförmigen Kohlenstoffnanoröhrchen beträgt bevorzugt 0,1 bis 20 µm, besonders bevorzugt 1 bis 10 µm. Die Kohlenstoffnanoröhrchen bestehen vorzugsweise aus 2 bis 50, besonders bevorzugt 3 bis 15 graphitischen Lagen (auch als "Schichten" oder "Wände" bezeichnet), die einen kleinsten Innendurchmesser von 2 bis 6 nm aufweisen. Diese Kohlenstoffnanoröhrchen werden beispielsweise auch als "Carbon Fibrils" oder "Hollow Carbon fibers" bezeichnet.

Die Herstellung der erfindungsgemäß eingesetzten CNT ist allgemein bekannt (vgl. z.B. US-A 5 643 502 und DE-A 10 2006 017 695), bevorzugt erfolgt die Herstellung nach dem in DE-A 10 2006 017 695, besonders bevorzugt nach dem in Beispiel 3 der DE-A 10 2006 017 695 offenbarten Verfahren.

Besonders bevorzugt kommt als Komponente C Ruß zum Einsatz, wobei grundsätzlich jede Art von Ruß für den Einsatz als Komponente C geeignet ist.

Ruß ist ein schwarzer pulverförmiger Feststoff, der je nach Qualität und Verwendung im wesentlichen aus Kohlenstoff besteht. Der Kohlenstoffgehalt von Ruß liegt im Allgemeinen bei 80,0 bis 99,9 Gew.-%. Bei nicht oxidativ nachbehandelten Rußen beträgt der Kohlenstoffgehalt bevorzugt 96,0 bis 95,5 Gew.-%. Durch Extraktion des Rußes mit organischen Lösungsmitteln, beispielsweise mit Toluol, können Spuren organischer Verunreinigungen auf dem Ruß entfernt werden und dadurch der Kohlenstoffgehalt auch auf größer als 99,9 Gew.-% erhöht werden. Bei oxidativ nachbehandelten Rußen kann der Sauerstoffgehalt bis zu 30 Gew.-%, bevorzugt bis zu 20 Gew.-%, insbesondere 5 bis 15 Gew.% betragen.

Ruß besteht aus meist kugelförmigen Primärpartikeln mit einer Größe von bevorzugt 10 bis 500 nm. Diese Primärpartikeln sind zu kettenförmigen oder verzweigten Aggregaten zusammengewachsen. Bei den Aggregaten handelt es sich im Allgemeinen um die kleinste in einem Dispergierungsverfahren zerteilbare Einheit des Rußes. Viele dieser Aggregate lagern sich wiederum durch intermolekulare (van-der-Waalssche) Kräfte zu Agglomeraten zusammen. Durch Variation der Herstellbedingungen können sowohl die Größe der Primärteilchen als auch deren Aggregierung (Struktur) gezielt eingestellt werden. Unter Struktur verseht der Fachmann dabei die Art der dreidimensionalen Anordnung der Primärpartikel in einem Aggregat. Von einer "hohen Struktur" spricht man bei Rußen mit stark verzweigten und vernetzten Aggregatstrukturen; bei weitgehend linearen, das heißt wenig verzweigten und vernetzten Aggregatstrukturen spricht man dagegen von "niedriger Struktur".

Als ein Maß für die Struktur eines Rußes wird im Allgemeinen die Öl-Adsorptions-Zahl gemessen nach ISO 4656 mit Dibutylphthalat (DBP) angegeben. Dabei ist eine hohe Öl-Adsorptions-Zahl ein Indikator für eine hohe Struktur.

Die Primärpartikelgröße eines Rußes lässt sich beispielsweise mittels Rasterelektronenmikroskopie ermitteln. Als ein Maß für die Primärpartikelgröße eines Rußes dient aber auch die BET-Oberfläche des Rußes bestimmt nach ISO 4652 mit Stickstoffadsorption. Dabei ist eine hohe BET-Oberfläche ein Indikator für eine kleine Primärpartikelgröße.

Die Dispergierbarkeit der Agglomerate eines Rußes hängt von der Primärpartikelgröße und der Struktur der Aggregate ab, wobei mit abnehmender Primärpartikelgröße und abnehmender Struktur die Dispergierbarkeit des Rußes in der Regel abnimmt.

Als technisches Produkt wird Industrieruß durch unvollständige Verbrennung oder Pyrolyse von Kohlenwasserstoffen hergestellt. Verfahren zur Herstellung von Industrieruß sind literaturbekannt. Bekannte Verfahren zur Herstellung von Industrierußen sind insbesondere das Furnace-, Gasruß-, Flammruß-, Acetylenruß- und Thermalruß-Verfahren.

Die Partikelgrößenverteilung der Primärteilchen sowie die Größe und Struktur der Primärteilchenaggregate bestimmen die Eigenschaften wie Farbtiefe, Grundton und Leitfähigkeit des Rußes. Leitruße besitzen dabei in der Regel kleine Primärteilchen und weitverzweigte Aggregate. Farbruße sind in der Regel Ruße mit sehr kleinen Primärpartikeln und werden oft nach der Herstellung nach einem der zuvor genannten Prozesse einer nachträglichen Oxidation unterzogen. Die dadurch auf die Rußoberfläche aufgebrachte oxidischen Gruppen sollen dabei die Verträglichkeit mit den Harzen, in denen die Farbruße eingebracht und dispergiert werden sollen, erhöhen.

Als Komponente C kommen bevorzugt Farbruße zum Einsatz. In bevorzugter Ausführungsform besitzen diese eine mittlere Primärpartikelgröße bestimmt durch Rasterelektronenmikroskopie von 10 bis 100 nm, weiter bevorzugt von 10 bis 50 nm, besonders bevorzugt von 10 bis 30 nm, insbesondere von 10 bis 20 nm. Die besonders feinteiligen Farbruße sind daher im erfindungsgemäßen Verfahren besonders bevorzugt, da die mit einer bestimmten Menge an Ruß erzielbare Farbtiefe und UV-Beständigkeit mit abnehmender Primärpartikelgröße zunimmt, andererseits aber auch deren Dispergierbarkeit abnimmt, weswegen insbesondere solche feinstteiligen Ruße einer Verbesserung in Bezug auf die Dispergierbarkeit bedürfen.

Die bevorzugt als Komponente C zum Einsatz kommenden Farbruße besitzen eine BET-Oberfläche bestimmt nach ISO 4652 durch Stickstoffadsorption von bevorzugt mindestens 20 m²/g, weiter bevorzugt von mindestens 50 m²/g, besonders bevorzugt von mindestens 100 m²/g, insbesondere von mindestens 150 m²/g.

Bevorzugt als Komponente C zum Einsatz kommende Farbruße sind darüber hinaus charakterisiert durch eine Öl-Adsorptions-Zahl gemessen nach ISO 4656 mit Dibutylphthalat (DBP) von bevorzugt 10 bis 200 ml/100g, weiter bevorzugt von 30 bis 150 ml/100g, besonders bevorzugt von 40 bis 120 ml/100g, insbesondere von 40 bis 80 ml/100g. Die Farbruße mit niedriger Öl-Adsorptions-Zahl erzielen in der Regel eine bessere Farbtiefe und sind insofern bevorzugt, lassen sich aber andererseits im Allgemeinen schwieriger dispergieren, weswegen insbesondere solche Ruße einer Verbesserung in Bezug auf die Dispergierbarkeit bedürfen.

Die als Komponente C zum Einsatz kommenden Ruße können und werden bevorzugt in pelletisierter oder geperlter Form eingesetzt. Die Perlung beziehungsweise Pelletisierung erfolgt dabei nach literaturbekannten Verfahren und dient einerseits der Erhöhung der Schüttdichte und der besseren Dosier(Fließ)eigenschaften, andererseits aber auch der Arbeitshygiene. Die Pellets beziehungsweise Perlen werden dabei in ihrer Härte bevorzugt so eingestellt, dass sie zwar Transport und Förderprozesse bei der Dosierung weitgehend unbeschadet überstehen, andererseits jedoch bei Einwirkung größerer mechanischer Scherkräfte, wie sie beispielsweise in handelsüblichen Pulvermischgeräten und/oder Compoundieraggregaten wirken, wieder vollständig in die Agglomerate zerscheren.

### Komponente D

Komponente D ist ausgewählt aus der Gruppe bestehend aus handelsübliche Polymeradditiven wie Flammschutzmittel (beispielsweise Halogenverbindungen oder Phosphorverbindungen wie monomere oder oligomere organische Phosphorsäureester, Phosphazene oder Phosphonatamine), Flammschutzsynergisten (beispielsweise nanoskalige Metalloxide), rauchhemmende Additive (beispielsweise Borsäure oder Borate), Antidrippingmittel (beispielsweise Verbindungen der Substanzklassen der fluorierten Polyolefine, der Silikone sowie Aramidfasern), interne und externe Gleit- und Entformungsmittel (beispielsweise Pentaerythrittetrastearat, Montanwachs oder Polyethylenwax), Fließfähigkeitshilfsmittel (beispielsweise niedermolekulare Vinyl(co)polymerisate), Antistatika (beispielsweise Blockcopolymere aus Ethylenoxid und Propylenoxid, andere Polyether oder Polyhydroxyether, Poletheramide, Polyesteramide oder Sulfonsäuresalze), Leitfähigkeitsadditive jenseits der Definition der Komponente C, Stabilisatoren (beispielsweise UV/Licht-Stabilisatoren, Thermostabilisatoren, Antioxidantien, Umesterungsinhibitoren, Hydrolyseschutzmittel), antibakteriell wirkende Additive (beispielsweise Silber oder Silbersalze), kratzfestigkeitsverbessernde Additive (beispielsweise Silikonöle oder harte Füllstoffe wie Keramik(hohl)kugeln), IR-Absorbentien, optische Aufheller, fluoreszierende Additive, Füll- und Verstärkungsstoffe jenseits der Definition der Komponente C (beispielsweise Talk, ggf. gemahlene Glasfasern, Glas- oder Keramik(hohl)kugeln, Glimmer, Kaolin, CaCO₃ und Glasschuppen) sowie Farbstoffe und andere Pigmente als Komponente C, andere Schlagzähigkeitsmodifikatoren als Komponente A, vermahlene thermoplastische Polymere und Brönstet-saure Verbindungen als Basenfänger, oder aber Mischungen mehrerer der genannten Additive.

### Beispiele

### Komponente A

Pfropfpolymerisat bestehend aus 28 Gew.-% Styrol-Acrylnitril-Copolymer mit einem Verhältnis aus Styrol zu Acrylnitril von 71 zu 29 Gew.-Teilen als Hülle auf 72 Gew.-% einer teilchenförmigen Pfropfgrundlage als Kern bestehend aus 46 Gew.-Teilen, bezogen auf die Pfropfgrundlage, Silikonkautschuk und 54 Gew.-Teilen, bezogen auf die Pfropfgrundlage, Butylacrylatkautschuk, hergestellt im Emulsionspolymerisationsverfahren.

### Komponente B

Wasser

### Komponente C

Black Pearls 800 (Capot Corporation, Leuven, Belgien): geperlter Pigmentruß mit einer mittleren Primärpartikelgröße bestimmt durch Rasterelektronenmikroskopie von 17 nm, einer BET-Oberfläche bestimmt nach ISO 4652 durch Stickstoffadsorption von 210 m²/g und einer Öl-Adsorptionszahl gemessen nach ISO 4656 mit Dibutylphthalat (DBP) von 65 ml/100 g.

### Komponente D

### Komponente D1

### Pentaerythrittetrastearat (PETS) eingesetzt als Pulver

### Komponente D2

Irganox B900: pulverförmiges Gemisch aus 80 Gew.-% Irgafos 168

(Tris-(2,4-di-tert.-butyl)phenyl-phosphit) und 20 Gew.-% Irganox 1076 (Octadecyl-3-(3,5-di-tert-butyl-4-hydroxyphenyl)propionat) (BASF, Deutschland, Ludwigshafen)

### Komponente D3

Tinuvin 329: 2-(2H-Benzotriazol-2-yl)-4-(1,1,3,3-tetramethylbutyl)phenol eingesetzt als Pulver (BASF, Deutschland, Ludwigshafen)

### Thermoplastisches Polymer (TP)

### Komponente TP 1

Lineares Polycarbonat auf Basis Bisphenol-A mit einem gewichtsgemittelten Molekulargewicht M̅_{w} von 25.000 g/mol (bestimmt durch GPC in Methylenchlorid mit Polycarbonat als Standard).

### Komponente TP 2

Styrol-Acrylnitril-Copolymer mit einem Styrolgehalt von 76 Gew.% und einen Acrylnitril-Gehalt von 24 Gew.% und einem gewichtsgemittelten Molekulargewicht M_{w} von 100.000 g/mol (bestimmt durch GPC in Dimethylformamid mit Polystyrol als Standard).

### Herstellung und Prüfung der Formmassen

Die in Tabelle 1 aufgeführten Zusammensetzungen wurden auf einem Zweischneckenextruder (ZSK-25) (Fa. Werner und Pfleiderer, Deutschland, Stuttgart) bei einer Drehzahl von 220 Upm und mit einem Durchsatz von 20 kg/h bei einer Schmelzetemperatur im Bereich von 260°C compoundiert und nach Abkühlen und Verfestigung der Schmelze des Compounds granuliert. Der Druck in der Entgasungszone des Extruders betrug dabei jeweils 200 mbar.

Beim Vergleichsbeispiel 1 wurden die Komponenten A, C sowie D1 bis D3 zunächst in einem Pulvermischer der Fa. Mixaco Dr. Herfeld GmbH & Co. KG Maschinenfabrik (Deutschland, Neuenrade) gemischt. Die so hergestellte pulverförmige Mischung wurde gemeinsam mit den beiden thermoplastischen Polymeren TP 1 und TP 2 in die Einzugszone des Zweischneckenextruders dosiert, in einer Knet- & Mischzone aufgeschmolzen und die verschiedenen Komponenten ineinander dispergiert und die Schmelze der so hergestellten Polymerlegierung anschließend in der Entgasungszone entgast.

Beim erfindungsgemäßen Beispiel 2 wurden zunächst die Komponenten A und B miteinander in dem Pulvermischer der Fa. Mixaco Dr. Herfeld GmbH & Co. KG Maschinenfabrik (Deutschland, Neuenrade) vorgemischt. Das Wasser (Komponente B) wurde vom Pfropfpolymer (Komponente A) vollständig absorbiert, so dass in diesem Schritt eine homogene pulverförmige Mischung resultierte, die sich in ihrem Riesel- und Dosierungshalten nicht von dem der Komponente A unterschied. Zu dieser Vormischung wurden die Komponenten D1 bis D3 gegeben und nochmals mit dem Mischer der Fa. Mixaco gemischt. Die so hergestellte pulverförmige Mischung wurde gemeinsam mit den beiden thermoplastischen Polymeren TP 1 und TP 2 in die Einzugszone des Zweischneckenextruders dosiert, in einer Knet- & Mischzone aufgeschmolzen und die verschiedenen Komponenten ineinander dispergiert und die Schmelze der so hergestellten Polymerlegierung anschließend in der Entgasungszone entgast.

Die aus der jeweiligen Compoundierung resultierenden Granulate wurden auf einer Spritzgussmaschine (Fa. Arburg) bei einer Schmelzetemperatur von 260°C und einer Werkzeugtemperatur von 80°C zu Probekörpern verarbeitet.

Die Kerbschlagzähigkeit [ak] der hergestellten Zusammensetzungen wurde bestimmt bei 23°C gemäß ISO 180-1A an Prüfkörpern der Abmessung 80 mm x 10 mm x 4 mm.

Als Maß für die Tieftemperaturzähigkeit der hergestellten Zusammensetzungen wurde ein Durchstoßversuch in Anlehnung an ISO 6603-2 bei -20°C an Prüfkörpern der Abmessung 60 mm x 60 mm x 2 mm durchgeführt und die maximale Energieaufnahme Ep bestimmt.

Die Wärmeformbeständigkeit wurde beurteilt anhand des Vicat B120-Wertes gemessen gemäß ISO 306 an Prüfkörpern der Abmessung 80 mm x 10 mm x 4 mm.

Die Schmelzefließfähigkeit wird beurteilt anhand der Schmelzevolumenfließrate (MVR) gemessen gemäß ISO 1133 bei einer Temperatur von 260°C und mit einer Stempellast von 5 kg.

Die Oberflächenqualität wurde visuell beurteilt an Plättchen der Abmessung 15 cm × 10 cm × 3 mm. Hier wurde die Fehlstellenzahl der Oberfläche aufgrund von nicht dispergierten Ruß-Pfropf-Agglomeraten beurteilt.

**Tabelle 1:**

| Rezepturen und Eigenschaften der beispielhaften Zusammensetzungen | | |
|---|---|---|
| | **V1** | **2** |
| **Zusammensetzung** | | |
| A | 6,82 | 6,82 |
| B | - | 1,00 |
| C | 0,99 | 0,99 |
| D1 | 0,73 | 0,73 |
| D2 | 0,10 | 0,10 |
| D3 | 0,79 | 0,79 |
| TP1 | 73,04 | 73,04 |
| TP2 | 17,53 | 17,53 |

| **Eigenschaften** | | |
|---|---|---|
| aₖ (23°C) [kJ/m²] | 18 | 46 |
| Ep (-20 J) [J] | 44 | 50 |
| MVR [ml/10min] | 27 | 27 |
| Vicat B120 [°C] | 133 | 134 |
| Fehlstellen auf der Oberfläche | ja | nein |

Der Vergleich von Beispielen 1 (Vergleich) und 2 (erfindungsgemäßes Beispiel) zeigt, dass durch den Zusatz von etwa 13 Gew.%, bezogen auf die Summe aus Komponenten A und B, an Wasser offenbar die Rußdispergierung in der thermoplastischen schlagzähmodifizierten Polycarbonatzusammensetzung bei ansonsten unverändertem Compoundierungsverfahren (mit gleichem spezifischen Energieeintrag) deutlich verbessert werden kann. Die verbesserte Dispergierung des Rußes äußerst sich dabei zum einen in einer Verbesserung von Kerbschlagzähigkeit und Tieftemperaturduktilität als auch zum anderen in einer signifikanten Verbesserung der Oberflächenqualität (reduzierte Anzahl von Fehlstellen = reduzierte Störstellenanzahl) spritzgegossener Formteile. Die Zugabe des Wasser führt dabei offenbar zu keinem Abbau der Polymere, insbesondere zu keinem hydrolytischen Abbau des Polycarbonats, welcher sich in einer Erhöhung des MVRs manifestieren würde, die nicht beobachtet wird. Des weiteren lässt sich das bei der Herstellung der Pulvermischung zugeführte Wasser über die Entgasung im Compoundierungsschritt offenbar wieder vollständig aus der Polymerzusammensetzung entfernen, da Restmengen an Wasser zu einer Erniedrigung des Vicat B 120-Wertes führen würden, die ebenfalls nicht beobachtet wird.

## Patentansprüche

1. Verwendung einer Mischung in einem Compoundierungsverfahren zur Herstellung pigmentierter schlagzähmodifizierter thermoplastischer Polymerzusammensetzungen enthaltend
A) 60 bis 98 Gew.-Teile, bezogen auf die Summe der Komponenten A und B, mindestens eines in Pulverform eingesetzten Pfropfpolymers bestehend aus einem kautschukelastischen Kern und einer aufgepfropften Polymerkomponente als Hülle,
B) 2 bis 40 Gew.-Teile, bezogen auf die Summe der Komponenten A und B, mindestens einer anorganischen oder organischen flüssigen Verbindung, und
C) mindestens ein Pigment,
**dadurch gekennzeichnet, dass** das Pfropfpolymer A und/oder das Pigment C die flüssige anorganische oder organische Verbindung B absorbiert oder adsorbiert und die Siedetemperatur der Komponente B bei Normaldruck unterhalb der Temperatur der Polymerschmelze während der Compoundierung liegt.

2. Verwendung einer Mischung gemäß Anspruch 1 enthaltend
A) 75 bis 92 Gew.-Teile, bezogen auf die Summe der Komponenten A und B, mindestens eines in Pulverform eingesetzten Pfropfpolymers bestehend aus einem kautschukelastischen Kern und einer aufgepfropften Polymerkomponente als Hülle und
B) 8 bis 25 Gew.-Teile, bezogen auf die Summe der Komponenten A und B, mindestens einer anorganischen oder organischen flüssigen Verbindung.

3. Verwendung nach Anspruch 1 oder 2, **dadurch gekennzeichnet, dass** das Pigment C ausgewählt ist aus der Gruppe bestehend aus Ruß, Graphit, Fulleren, Graphen, Aktivkohle und Kohlenstoff-Nanoröhrchen.

4. Verwendung einer Mischung nach Anspruch 1 oder 2, **dadurch gekennzeichnet, dass** Komponente B ausgewählt ist aus der Gruppe, die Wasser, Methanol, Ethanol, n-Propanol, Isopropanol, Dimethylformamid, Aceton, n-Hexan, Cyclohexan, n-Heptan, n-Octan, Toluol, sowie Mischungen dieser Flüssigkeiten umfaßt.

5. Verwendung einer Mischung nach Anspruch 1 oder 2, **dadurch gekennzeichnet, dass** es sich bei der Komponente B um Wasser handelt.

6. Verwendung einer Mischung nach Anspruch 1 oder 2, **dadurch gekennzeichnet, dass** Komponente B eine einphasige Mischung aus Wasser und mindestens einer mit Wasser partiell oder vollständig mischbaren weiteren Flüssigkeit ist, wobei der Wasseranteil mindestens 90 Gew.-% beträgt.

7. Verwendung einer Mischung nach Anspruch 1 oder 2, **dadurch gekennzeichnet dass** die Komponente A zu Komponente C in einem Verhältnis von 3:1 bis 50:1 vorliegt.

8. Verwendung einer Mischung nach Anspruch 1 oder 2, **dadurch gekennzeichnet, dass** die Mischung mindestens eine weitere pulverförmige Komponente D enthält ausgewählt aus der Gruppe bestehend aus vermahlenen thermoplastischen Polymeren, Flammschutzmitteln, Flammschutzsynergisten, rauchhemmenden Additiven, Antidrippingmitteln, internen und externen Gleit- und Entformungsmitteln, Fließfähigkeitshilfsmitteln, Antistatika, Leitfähigkeitsadditiven, Nukleirmitteln, Stabilisatoren, antibakteriell wirkenden Additiven, kratzfestigkeitsverbessernden Additiven, IR-Absorbentien, optischen Aufhellern, fluoreszierenden Additiven, Füll- und Verstärkungsstoffen, Farbstoffen und Pigmenten jenseits der Definition der Komponente C, Schlagzähmodifikatoren jenseits der Definition der Komponente A, und Brönstet-sauren Verbindungen.

9. Verwendung einer Mischung gemäß einer der vorhergehenden Ansprüche, **dadurch gekennzeichnet, dass** die Mischung mindestens ein themoplastische Polyer TP oder mindestens eine Komponente D in Granulatform in einem Gehalt von 1 bis 10 Gew.-Teilen , bezogen auf die Summe aller Komponenten in dieser Mischung, enthält.

10. Verfahren zur Herstellung schlagzähmodifizierter thermoplastischer Zusammensetzungen enthaltend mindestens ein Pigment, in dem
(i) in einem ersten Verfahrensschritt eine Mischung hergestellt wird enthaltend
A) 60 bis 98 Gew.-Teile, bezogen auf die Summe der Komponenten A und B, mindestens eines in Pulverform eingesetzten Pfropfpolymers bestehend aus einem kautschukelastischen Kern und einer aufgepfropften Polymerkomponente als Hülle,
B) 2 bis 40 Gew.-Teile, bezogen auf die Summe der Komponenten A und B, mindestens einer anorganischen oder organischen flüssigen Verbindung,
und
C) mindestens ein Pigment,
**dadurch gekennzeichnet, dass** das Pfropfpolymer A und/oder das Pigment C die flüssige anorganische oder organische Verbindung B absorbiert oder adsorbiert und
die Siedetemperatur der Komponente B bei Normaldruck (1 bar) unterhalb der Temperatur der Polymerschmelze in der Entgasungzone im Verfahrensschritt (ii) liegt,
(ii) und in einem zweiten Verfahrensschritt
20 bis 99 Gew.-Teile, bezogen auf die Summe der im zweiten Verfahrenschritt eingesetzten Komponenten, einer Komponente (TP) ausgewählt aus der Gruppe, bestehend aus mindestens einem thermoplastischen Polymer oder einer Mischung aus mindestens einem thermoplastischen Polymer und mindestens einem Pfropfpolymer bestehend aus einem kautschukelastischen Kern und einer aufgepfropften Polymerkomponente als Hülle gemäß Komponente A, mit
1 bis 80 Gew.-Teilen, bezogen auf die Summe der im zweiten Verfahrensschritt eingesetzten Komponenten, der im Verfahrensschritt (i) hergestellten Mischung, und
optional mit bis zu 40 Gew.-Teilen, bezogen auf die Summe der im zweiten Verfahrensschritt eingesetzten Komponenten, weiterer Komponenten gemischt, aufgeschmolzen und ineinander dispergiert werden,
wobei die anorganische oder organischen Verbindung B aus der so hergestellten legierten Polymerschmelze durch Anlegen eines Unterdrucks wieder entfernt wird.

11. Verfahren gemäß Anspruch 10, **dadurch gekennzeichnet, dass** es sich bei der Komponente B um Wasser handelt.

12. Verfahren nach Anspruch 10, **dadurch gekennzeichnet, dass** Komponente B eine einphasige Mischung aus Wasser und mindestens einer mit Wasser partiell oder vollständig mischbaren weiteren Flüssigkeit ist, wobei der Wasseranteil mindestens 90 Gew.-% beträgt.

13. Verfahren nach Anspruch 10, **dadurch gekennzeichnet, dass** es sich bei der Komponente C um Ruß handelt.

14. Verfahren nach Anspruch 13, **dadurch gekennzeichnet, dass** der Ruß gemäß Komponente C eine BET-Oberfläche bestimmt durch Stickstoffadsorption nach ISO 4652 von mindestens 100 m²/g und eine Öl-Adsorptions-Zahl gemessen mit Dibutylphthalat nach ISO 4656 von 40 bis 120 ml/100g aufweist.

15. Zusammensetzungen hergestellt nach einem der Verfahren nach Anspruch 10 und Formkörper hergestellt aus solchen Zusammensetzungen.
